Europäisches Patentamt

European Patent Office

Office européen des brevets

(19)

(11) Veröffentlichungsnummer: **0 220 774**
**B1**

(12) **EUROPÄISCHE PATENTSCHRIFT**

(45) Veröffentlichungstag der Patentschrift:
04.10.89

(21) Anmeldenummer: 86201840.5

(22) Anmeldetag: 22.10.86

(51) Int. Cl.⁴: **C03B 19/04**, C03B 20/00,
C03B 37/012, H01J 5/04

(54) Verfahren zur Herstellung von rotationssymmetrischen Glaskörpern.

(30) Priorität: **25.10.85 DE 3537972**

(43) Veröffentlichungstag der Anmeldung:
**06.05.87 Patentblatt 87/19**

(45) Bekanntmachung des Hinweises auf die Patenterteilung:
**04.10.89 Patentblatt 89/40**

(84) Benannte Vertragsstaaten:
**DE FR GB NL SE**

(56) Entgegenhaltungen:
CH-A- 651 533
GB-A- 1 044 579
GB-A- 2 023 571
GB-A- 2 140 408

PATENT ABSTRACTS OF JAPAN, unexamined
applications, C Field, Band 9, Nr. 222, 9.
September 1985, THE PATENT OFFICE JAPANESE
GOVERNMENT, p. 132 C 302

(73) Patentinhaber: **Philips Patentverwaltung GmbH,**
**Wendenstrasse 35 Postfach 10 51 49,**
**D-2000 Hamburg 1(DE)**

(84) Benannte Vertragsstaaten: **DE**

(73) Patentinhaber: **N.V. Philips' Gloeilampenfabrieken,**
**Groenewoudseweg 1, NL-5621 BA Eindhoven(NL)**

(84) Benannte Vertragsstaaten: **FR GB NL SE**

(72) Erfinder: **Clasen, Rolf, Dr. Dipl.-Phys.,**
**Schlossparkstrasse 36, D-5100 Aachen(DE)**

(74) Vertreter: **Nehmzow-David, Fritzi-Maria et al, Philips**
**Patentverwaltung GmbH**
**Wendenstrasse 35 Postfach 10 51 49,**
**D-2000 Hamburg 1(DE)**

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische Patent
Einspruch einlegen. Der Einspruch ist schriftlich einzureichen und zu begründen. Er gilt erst als eingelegt, wenn die
Einspruchsgebühr entrichtet worden ist (Art. 99(1) Europäisches Patentübereinkommen).

## Beschreibung

Die Erfindung betrifft ein Verfahren zur Herstellung von rotationssymmetrischen Glaskörpern, bei dem das Ausgangsmaterial für den Glaskörper in Form einer thixotropen Suspension, bestehend aus dem Werkstoff des auszubildenden Glaskörpers in Pulverform als Feststoff und einem flüssigen Dispergiermittel, in eine Hohlform mit einer der Geometrie des auszubildenden Glaskörpers entsprechenden Geometrie eingebracht wird, derart, daß die Hohlform um ihre Längsachse gedreht wird, wobei sich die Suspension an der Innenwandung der Hohlform ablagert, wonach der entstandene Grünkörper gereinigt und gesintert wird.

Die Erfindung betrifft weiter eine Vorrichtung zur Durchführung eines derartigen Verfahrens.

Das eingangs genannte Verfahren ist insbesondere geeignet zur Herstellung von Vorformen für optische Wellenleiter aus Quarzglas.

Optische Wellenleiter werden für eine Vielzahl von Anwendungszwecken eingesetzt, so z.B. für Lichtübertragungseinrichtungen kurzer Distanz oder für Lichtübertragungssysteme großer Distanz, wie bei optischen Kommunikationssystemen, wovon die Kernbereiche überwiegend aus einem Glas mit hohem Siliciumdioxidgehalt bestehen, das erforderlichenfalls ein Dotierungsmittel zur Einstellung des Brechungsindex des Glases enthält.

Gläser, die für optische Wellenleiter geeignet sind, sind ebenfalls mit Vorteil verwendbar für die Herstellung von Lampenkolben für Halogen- oder Gasentladungslampen, denn diese Gläser müssen, ebenso wie die Gläser für optische Wellenleiter, nahezu wasserfrei sein und einen hohen Siliciumdioxidgehalt aufweisen.

Aus GB-PS 682 580 ist ein Verfahren bekannt, das dazu dient, poröse Glasrohre, z.B. als Filter für Laborzwecke, durch Zentrifugieren herzustellen, wobei es auf eine möglichst gleichmäßige Porenverteilung und Porengröße zwischen den angeschmolzenen Glaspartikeln ankommt und die Poren untereinander in Verbindung stehen müssen. Zu diesem Zweck werden Suspensionen von Glaspulver möglichst einheitlicher Korngröße in einem, ein Absetzen der Feststoffpartikel verhindernden Bindemittel, z.B. einer wässerigen Glyzerinlösung, unter Zusatz von Benetzungsmitteln und Mitteln, die ein Aufschäumen der Suspension verhindern, ständig gerührt, um die Feststoffpartikel innerhalb der Suspension in einem gewünschten, der späteren Porosität entsprechenden, Verteilungszustand zu halten, bevor sie in die Zentrifuge eingebracht werden und dort auf der Innenwand einen lockeren Verbund abgeschiedener Feststoffpartikel bilden. Die Zentrifuge hat zwei senkrecht zur Längsachse angeordnete Verschlußstopfen. Ein solches Verfahren ist nicht geeignet, wenn auf einer Zentrifugeninnenwand Feststoffpartikel abgeschieden werden sollen, die in möglichst dichter Feststoffpackung vorliegen müssen und wenn Suspensionen mit einem hochdispersen Feststoff, d.h. mit Feststoffpartikeln sehr unterschiedlicher Teilchengröße, verarbeitet werden sollen.

Der Erfindung liegt die Aufgabe zugrunde, das Verfahren der eingangs genannten Art zu verbessern und eine Vorrichtung zur Durchführung dieses Verfahrens zu schaffen, mit denen es möglich ist, aus Ausgangsmaterial für die Herstellung von Glaskörpern in Form einer vorzugsweise wässerigen Suspension mit einem Feststoffanteil an hochdispersen $SiO_2$-Teilchen durch einen Zentrifugierprozeß relativ kurzer Dauer mechanisch stabile Grünkörper mit hoher geometrischer Präzision herzustellen, die eine solche Dichte aufweisen, daß sie zu porenfreien Quarzglaskörpern einer Qualität, die für die Herstellung von Vorformen für optische Wellenleiter ausreicht, weiterverarbeitet werden können.

Diese Aufgabe wird erfindungsgemäß dadurch gelöst, daß für den Feststoffanteil der thixotropen Suspension hochdisperse Teilchen eingesetzt werden, daß das Ausgangsmaterial durch Einwirkung mechanischer Kräfte in einen Zustand minimaler Viskosität überführt wird und daß das Ausgangsmaterial mitsamt der Hohlform auf eine Temperatur unterhalb des Siedepunktes der Dispergierflüssigkeit solange erhitzt wird, bis es vernetzt und verfestigt und der Hohlform entnehmbar ist.

Eine Vorrichtung zur Durchführung dieses Verfahrens ist gekennzeichnet durch eine als Zentrifuge um ihre Längsachse antreibbare Hohlform zur Aufnahme von Ausgangsmaterial für den Glaskörper in Form einer Suspension zur Ausbildung eines Grünkörpers mit zwei senkrecht zur Längsachse der Hohlform angeordneten Verschlußstopfen und mit einer Einrichtung, über welche Hochfrequenz oder Mikrowellenenergie in die Hohlform und das in ihr befindliche Ausgangsmaterial einkoppelbar ist.

Der Erfindung liegt die Erkenntnis zugrunde, daß ein besonders hoher Thixotropieeffekt bei Suspensionen aus hochdispersen Teilchen, wie $SiO_2$-Teilchen, vorzugsweise eines Teilchendurchmessers im Bereich von 10 bis 500 nm eintritt, der noch durch Zusatz einer die Vernetzung der Feststoffpartikel in der Suspension fördernden ionogenen Substanz, die den pH-Wert der Suspension in den sauren Bereich (pH = 3) oder in Richtung auf den basischen Bereich (pH = 5 bis 8) verschiebt, unterstützt und dazu ausgenutzt werden kann, das Ausgangsmaterial zunächst durch Einwirkung mechanischer Kräfte, vorzugsweise Schall oder Ultraschall, zu verflüssigen, d.h. in einen Zustand mit minimaler Viskosität zu überführen, in dem das Ausgangsmaterial effizient homogenisiert und verdichtet werden kann. Eine derart vorbereitete Suspension läßt sich in relativ kurzer Dauer durch Zentrifugieren auf der Innenwandung einer Hohlform abscheiden und Vernetzungsreaktionen zwischen den Feststoffteilchen der Suspension, die zur Verfestigung des abgeschiedenen Grünkörpers führen, können durch eine Erhitzung des abgeschiedenen Grünkörpers auf Temperaturen unterhalb des Siedepunktes des Dispergiermittels beschleunigt werden.

Nach vorteilhaften Weiterbildungen des Verfahrens gemäß der Erfindung werden als Ausgangsmaterial für den Glaskörper Suspensionen eingesetzt, die als Feststoff $SiO_2$-Partikel ohne oder mit für die Herstellung eines gewünschten Brechungsindex geeignete(r) Dotierung eines Durchmessers im Bereich von 10 bis 500 nm, vorzugsweise 10 bis 100 nm, mit einem mittleren Teilchendurchmesser von 40 nm enthalten. Als Dotierstoff ist z.B. $GeO_2$ geeignet. Hiermit ist der Vorteil verbunden, daß sich bei Zusatz von 0,1 bis 5 Gew.%, vorzugsweise 0,75 bis 1 Gew.%, bezogen auf den Feststoffanteil der Suspension, eines ionogenen Zusatzstoffes, der den pH-Wert der Suspension in Richtung auf den sauren Bereich (pH ≦ 3) oder in Richtung auf den basischen Bereich (pH ≧ 5 und ≦ 8) verschiebt, ein besonders hoher Thixotropieeffekt ergibt und daß aus einem solchen Ausgangsmaterial trotz seiner hohen Füllung mit hochdispersen Feststoffteilchen sehr homogene, hochverdichtete Grünkörper über einen Zentrifugierprozeß hergestellt werden können.

Nach weiteren vorteilhaften Ausgestaltungen des Verfahrens nach der Erfindung wird als ionogener Zusatzstoff eine Ammoniumverbindung und insbesondere $NH_4F$ in wässeriger Lösung eingesetzt. Ammoniumverbindungen sind leicht flüchtig und sind daher in einem nachfolgenden Reinigungs-Erhitzungsschritt rückstandslos aus dem Grünkörper zu entfernen, so daß Quarzglaskörper einer sehr hohen Reinheit herstellbar sind. Durch den Zusatz einer Ammoniumverbindung, beispielsweise $NH_3$ in wässeriger Lösung, werden Grünkörper einer relativ hohen Festigkeit erreicht, da an den Kontaktstellen zweier $SiO_2$-Primärpartikel eine Gelbildung auftritt. Bei beispielsweise einer Suspensionstemperatur von 20°C und einem pH-Wert ≦ 10 geht $SiO_2$ in der Größenordnung von etwa 100 ppm in Lösung und wird an den Kontaktstellen ausgeschieden und bildet damit eine Brückenschicht. Wird $NH_4F$ in wässeriger Lösung als ionogener Zusatzstoff eingesetzt, kann eine Fluordotierung erreicht werden, die beispielsweise für die Herstellung von Mantelgläsern für optische Wellenleiter geeignet ist.

Nach einer weiteren vorteilhaften Ausgestaltung des Verfahrens nach der Erfindung wird das Ausgangsmaterial durch Einwirkung von Schall bei einer Frequenz f im Bereich von 20 bis 200 Hz oder Ultraschall bei einer Frequenz f im Bereich von 20 bis 50 kHz in einen Zustand mit minimaler Viskosität überführt. Eine Gel-Sol-Umwandlung tritt bei thixotropen Systemen bei jeder Art mechanischer Einwirkung, z.B. Rühren oder Schütteln ein, wird jedoch zur Verflüssigung einer höherviskosen Ausgangsmasse eine Schalloder Ultraschallschwinger eingesetzt, dessen Amplitude so bemessen ist, daß das Schall- bzw. Ultraschallfeld in das zu verflüssigende Ausgangsmaterial eingekoppelt wird, ergibt sich eine besonders schnelle Verflüssigung des Ausgangsmaterials und damit eine wirkungsvolle Auflösung von Packungshohlräumen im Ausgangsmaterial (Gasblasen steigen im verflüssigten Ausgansmaterial nach oben und werden so selbsttätig eliminiert). Ein solches Entgasen kann z.B. durch Verflüssigen des Ausgangsmaterials im Vakuum noch beschleunigt werden. In dem Verfahrensschritt nach dieser Weiterbildung der Erfindung ist ein besonderer Vorteil zur homogenen Aufbereitung einer Suspension mit einem Feststoffanteil an hochdispersen $SiO_2$-Partikeln für einen Zentrifugierprozeß zu sehen.

Nach einer weiteren vorteilhaften Ausgestaltung des Verfahrens nach der Erfindung wird das durch Zentrifugieren in der Hohlform abgeschiedene Ausgangsmaterial durch Einkoppeln von Mikrowellenenergie einer Frequenz f ≈ 2,45 GHz oder Hochfrequenzenergie einer Frequenz f ≈ 27 MHz auf eine Temperatur unterhalb des Siedepunktes der Dispergierflüssigkeit erhitzt. Wie oben bereits dargelegt, liegt der Erfindung die Erkenntnis zugrunde, daß Vernetzungsreaktionen zwischen Primärteilchen, wie sie bei thixotropen Systemen eintreten, entscheidend beschleunigt werden können durch erhöhte Temperaturen unterhalb des Siedepunktes der Dispergierflüssigkeit. Wässerige Suspensionen können dazu mit Vorteil direkt über eingekoppelte Mikrowellenenergie erhitzt werden.

Nach weiteren vorteilhaften Ausgestaltungen des Verfahrens gemäß der Erfindung wird eine Hilfsschicht aus einer Flüssigkeit, deren Dichte größer als die Dichte der Suspension ist, vor Abscheiden des Grünkörpers durch Zentrifugieren auf der Innenwandung der Hohlform abgeschieden. Als Flüssigkeiten zur Bildung der Hilfsschicht kommen vorzugsweise Bromnaphtalin oder Dijodmethan in Betracht. Hiermit ist der Vorteil verbunden, daß Oberflächenrauhigkeiten der Hohlform ausgeglichen werden und daß die Entformbarkeit der abgeschiedenen Grünkörper erleichtert wird. Zugleich werden Exzentrizitäten der als Zentrifuge arbeitenden Hohlform ausgeglichen.

Nach weiteren vorteilhaften Ausgestaltungen des Verfahrens nach der Erfindung wird zwischen der Hilfsschicht und dem Grünkörper eine Trennschicht vorgesehen, die aus einem Kunststoff besteht, der mit der Dispergierflüssigkeit nicht reagiert. Als Material sür diese Trennschicht können beispielsweise Polykarbonate, Polyäthylenterephthalate oder elastomere Kunststoffe, wie z.B. Polyurethan, eingesetzt werden. Diese Materialien sind in Schlauchform erhältlich, was den Vorteil bietet, daß die Suspension z.B. bereits in dem Schlauch durch Einwirkung von Schall oder Ultraschall homogenisiert und in einen Zustand niedriger Viskosität überführt und danach in die als Zentrifuge arbeitende Hohlform eingesetzt werden kann. Nach Vernetzen und Verfestigen des durch Zentrifugieren abgeschiedenen Grünkörpers kann der Schlauch dann durch Aufschneiden und Abziehen oder durch chemisches Ablösen vom Grünkörper entfernt werden. Die Verwendung eines Schlauches aus einem elastomeren Kunststoff hat den Vorteil, daß es nicht erforderlich ist, eine zusätzliche Hilfsschicht auf der Innenwandung der Hohlform anzubringen, die im Falle der Verwendung von Schläuchen aus nicht elastischen Kunststoffen als Trennschicht für eine optimale Zentrierung sorgt. Wird für die Trennschicht ein elastisches Material eingesetzt, legt sich z.B. ein Schlauch aus einem solchen Kunststoff aufgrund seiner Elastizität sehr gut ohne Hilfsschicht an die Innenwandung der Hohlform an und wird auch ohne Unterstützung durch eine Hilfsschicht gut in der Hohlform zentriert.

Wird eine Trennschicht in Schlauchform aus einem Elastomer ohne entsprechende Hilfsschicht eingesetzt, muß die Form zum Entnehmen des Grünkörpers teilbar sein.

Nach einer vorteilhaften weiteren Ausbildung des Verfahrens nach der Erfindung wird die Suspension gekühlt, vorzugsweise auf eine Temperatur von ≈ 4°C, in die Hohlform eingebracht. Hiermit ist der Vorteil verbunden, daß der Vernetzungsprozeß zwischen den Feststoffpartikeln der Susppension zunächst langsam einsetzt.

Die mit der Erfindung erzielbaren Vorteile bestehen insbsondere darin, daß thixotrope Suspensionen mit einem Feststoffanteil an hochdispersen $SiO_2$-Teilchen in einem Zentrifugierprozeß effizient verformt werden können. Bei Zentrifugierprozessen muß im allgemeinen darauf geachtet werden, daß die abzuscheidenden Feststoffpartikel eine möglichst einheitliche Teilchengröße aufweisen, nur so lassen sich Schrumpfungsrisse beim Trocknen der aus submikroskopischen Feststoffteilchen bestehenden abgeschiedenen Grünkörper verhindern. Da fertig im Handel erhältliche pulverförmige Ausgangsmaterialien, die z.b. für die Herstellung von optischen Wellenleitern verwendet werden, breite Kornverteilungen aufzuweisen pflegen (z.B. Teilchendurchmesser von 5 bis 500 nm), war es insbesondere bei Anwendung dieser hochdispersen aus dem Handel erhältlichen $SiO_2$-Pulver für Zentrifugierprozesse notwendig, zunächst eine arbeitsaufwendige Klassierung vorzunehmen.

Überraschenderweise wurde nun gefunden, daß eine Klassierung der im Handel erhältlichen $SiO_2$-Pulver nicht erforderlich ist, sondern daß auch hochverdichtete, homogene Grünkörper über einen Zentrifugierprozeß erhalten werden können unter Anwendung einer vorzugsweise wässerigen Suspension, deren Feststoffanteil aus hochdispersen $SiO_2$-Pulvern besteht, wenn die Suspension vorzugsweise vor Einbringen in die Zentrifuge mittels Schall oder Ultraschall homogenisiert und in einen Zustand niedriger Viskosität überführt und die Vernetzung der abgeschiedenen Feststoffpartikel durch Erwärmung bis auf eine Temperatur unterhalb des Siedepunktes der Dispergierflüssigkeit unterstützt wird.

Ein weiterer Vorteil des erfindungsgemäßen Verfahrens liegt darin, daß relative niedrige Umdrehungszahlen der Zentrifuge in der Größenordnung von 2000 bis 4000 U/min zum Abscheiden des Grünkörpers ausreichen.

Ein weiterer Vorteil des vorliegenden Verfahrens ist, daß die mittels Zentrifugieren erhaltenen Grünkörper eine hohe Verdichtung aufweisen und zwar auf Grund der eingesetzten Suspensionen mit einem hohen und hochdispersen Feststoffanteil. Es ist hervorzuheben, daß durch den Zentrifugierprozeß keine Phasentrennung der eingesetzten Suspensionen auftritt. Die anschließend durch Sinterung der Grünkörper erhaltenen Quarzglaskörper weisen eine sehr hohe Maßhaltigkeit auf und sind poren- und schlierenfrei.

Ein weiterer Vorteil ist, daß infolge der sehr niedrigen Viskosität der Suspensionen eine einfache Mischung und Herstellung sehr homogener Suspensionen möglich ist, wobei Luftbläschen, die sich in der Suspension befinden, leicht entweichen können.

Ein weiterer Vorteil ist, daß rotationssymmetrische Grünkörper mit einem beliebigen Querschnitt erhalten werden können, die einerseits so fest sind, daß sie ohne Schwierigkeiten handhabbar sind und eine für die nachfolgende Sinterung des Grünkörpers erwünschte hohe Dichte (35 bis 50% der Dichte kompakten Quarzglases) aufweisen, die aber andererseits porös und damit gasdurchlässig sind, so daß sie in einem nach der Trocknung erfolgenden Reinigungsschritt in einer mit vorliegenden Verunreinigungen reagierenden erhitzten Gasphase effizient gereingt werden können.

Ein weiterer Vorteil ist, daß außerordentlich homogene Grünkörper erhalten werden können; dies ist nicht nur im Hinblick auf einen zu erreichenden blasen- und schlierenfreien Glaskörper von Bedeutung, sondern auch für die Trocknung der abgeschiedenen Grünkörper. Besonders an Inhomogenitäten im Grünkörper treten häufig Trockenrisse auf. Trockenrisse treten auch infolge nicht ausreichender Bindungskräfte zwischen den Feststoffteilchen auf, also dann, wenn die Oberfläche der Feststoffteilchen nicht gleichmäßig genug mit Vernetzungsreaktionen fördernden Zu satzstoffen bedeckt ist. Bei Systemen mit großen Oberflächen ist dies problematisch und das Verfahren der vorliegenden Erfindung schafft hier durch die erreichbare sehr gute Homogenisierung des Ausgangsmaterials eine entscheidende Verbesserung.

Ein weiterer Vorteil ist, daß die abgeschiedenen Grünkörper leicht entformbar sind, selbst wenn Grünkörper in Form von langen Rohren hergestellt werden. Dies wird erreicht durch Anbringen der Hilfsschicht auf der Innenwandung der Hohlform, sowie Verwendung einer Trennschicht.

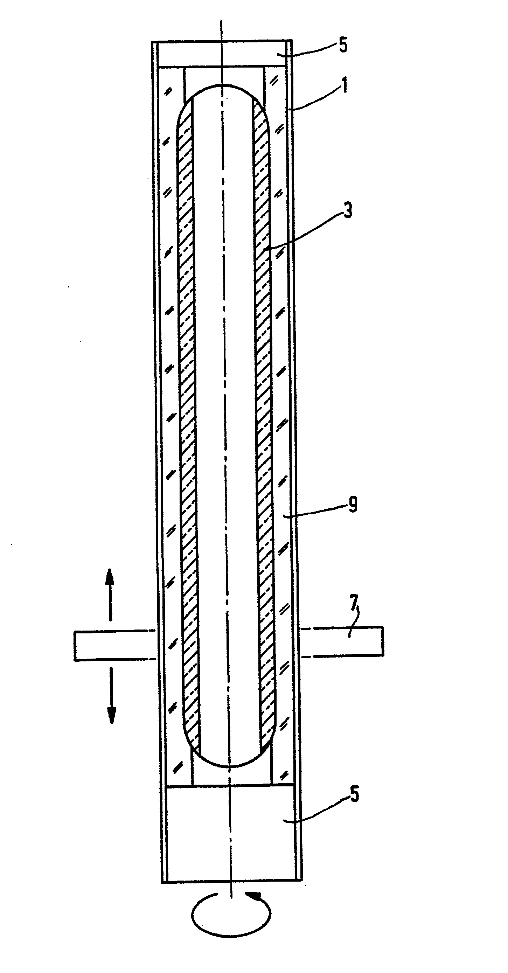

Anhand der Zeichnung werden Ausführungsbeispiele der Erfindung beschrieben und es wird die Erfindung in ihrer Wirkungsweise erläutert.

Die Figur zeigt eine als Zentrifuge antreibbare Hohlform 1 im Schnitt mit einer auf der Innenwandung der Hohlform 1, durch Zentrifugieren abgeschiedenen, aus einer Flüssigkeit einer höheren Dichte als die der Suspension bestehenden Hilfsschicht 9. Die Hilfsschicht 9 kann beispielsweise aus Bromnaphtalin oder Dijodmethan bestehen. Auf dieser Hilfsschicht 9 ist ein durch Zentrifugieren abgeschiedener Grünkörper 3 dargestellt, der aus einer Suspension, die hochdisperse $SiO_2$-Partikel eines Teilchendurchmessers im Bereich von 10 bis 500 nm, vorzugsweise 10 bis 100 nm mit einem mittleren Teilchendurchmesser von 40 nm als Feststoff, Wasser als Dispergiermittel und einen ionogenen Zusatzstoff, der den pH-Wert der Suspension in den basischen Bereich verschiebt (beispielsweise $NH_4F$ in wässeriger Lösung) enthält. Die Hohlform 1 ist durch zwei Verschlußstopfen 5 stirnseitig verschlossen. Längs der Achse der Hohlform 1 ist eine Einrichtung 7 verschiebbar, über welche Hochfrequenz- oder Mikrowellenenergie in die Hohlform 1 und die in ihr befindliche Suspension beziehungsweise in den in ihr abgeschiedenen Grünkörper 3 einkoppelbas ist. Die Aufheizung insbesondere des abgeschiedenen Grünkörpers 3 kann auch innerhalb eines Ofens erfolgen, die Dauer des Vernetzungsprozesses verlängert sich hierbei jedoch etwas. Die Hohlform 1 ist um ihre Längsachse vertikal oder horizontal drehbar mittels eines Motors mit einer Drehzahl im Bereich von 2000 bis 4000 U/min; der Motor ist in der Zeichnung nicht dargestellt. Die Hohlform kann für den Zentrifugierprozeß beispielsweise in eine handelsübliche Drehbank eingespannt sein.

Die Erfindung wurde mit folgenden Ausführungsbeispielen realisiert:

Beispiel I

Es wird eine Suspension aus 100 g Quarzglaspulver mit einem mittleren Teilchendurchmesser von 40 nm bei einer Teilchengrößenverteilung im Bereich von 10 bis 100 nm mit 95 ml bidestilliertem Wasser und 15 ml einer wässerigen 5%igen Ammoniumfluoridlösung $NH_4F$ hergestellt und 15 Minuten in einem Ultraschallband einer Frequenz $f \approx 20$ bis 50 kHz homogenisiert. Die vorzugsweise auf eine Temperatur von $\approx 4°C$ gekühlte Suspension wird zusammen mit 40 ml Bromnaphtalin in ein Glasrohr als Hohlform 1 mit einem Durchmesser von 25 mm und einer Länge von 600 mm gegossen und an den Enden mit Verschlußstopfen 5 verschlossen, die so ausgebildet sind, daß diese in eine handelsübliche Drehbank eingespannt werden können. Das Kühlen der Suspension hat den Vorteil, daß der anschließende Vernetzungsprozeß zwischen den Feststoffpartikeln der Suspension nur langsam einsetzt. Das gefüllte Rohr wird dann vier Minuten lang mit einer Umdrehungsgeschwindigkeit von 3400 U/min gedreht, wobei zunächst das Bromnaphtalin aufgrund seiner gegenüber der wässerigen Suspension höheren Dichte einen dünnen Flüssigkeitsfilm 9 auf der Rohrinnenseite bildet. Anschließend scheidet sich die Suspension in Form einer gleichmäßig dicken konzentrischen Schicht ab, die den Grünkörper 3 bildet. Es tritt hierbei keine Trennung der flüssigen und der festen Phase der eingesetzten Suspension auf. Bei einer auf 2500 U/min reduzierten Rotation erfolgt die Vernetzung der Feststoffpartikel innerhalb des abgeschiedenen Grünkörpers durch Mikrowellenaufheizung mittels eines Mikrowellenresonators 7, der bei einer Frequenz von 2,45 GHz arbeitet und eine Leistung von 100 W abgibt. Der Mikrowellenresonator wird mit einer Geschwindigkeit von 6 cm/min mehrmals über die gesamte Länge der Hohlform hinund hergefahren. Nach Öffnen der Verschlußstopfen läßt sich der vernetzte, verfestigte Grünkörper leicht entnehmen und wird auf einer weichen Unterlage über eine Dauer von acht Tagen vollständig getrocknet. Der erhaltene rohrförmige Grünkörper 3 wird anschließend zwei Stunden bei einer Temperatur von 800°C in einer Sauerstoffatmosphäre mit einem Zusatz von 10 Vol.% Chlorgas gereinigt und danach in einer Heliumatmosphäre mit 2 Vol.% Chlorgaszusatz bei einer Temperatur von 1500°C gesintert, wobei der zu sinternde Körper mit einer Geschwindigkeit von 10 mm/min durch den Sinterofen geführt wird.
Es wurde ein transparentes, blasen- und schlierenfreies Quarzglasrohr mit einer Dichte von 2,20

$g/cm^3$ und einem Brechungsindex von $n_D = 1,4590$ erhalten. Der Durchmesser des erhaltenen Quarzglasrohres beträgt 18 mm außen und 13 mm innen. Die Restverunreinigungen an Wasser und Übergangsmetallen betragen weniger als 10 ppb.

Beispiel II.

In gleicher Weise wie zu Beispiel I beschrieben, wird eine Suspension aus 100 g Quarzglaspulver, 80 ml Wasser und 20 ml einer 5%igen $NH_4F$-Lösung hergestellt und homogenisiert. Die Suspension wird in einen Folienschlauch aus Polyäthylenterephthalat mit einem Durchmesser von 24 mm gefüllt; der Schlauch wird unter einem Überdruck von 0, 1 bar verschlossen. Der Folienschlauch bildet bei dem anschließenden Zentrifugierprozeß eine Trennschicht zwischen der Hilfsschicht 9 und dem zentrifugierten Grünkörper 3. Der Folienschlauch wird, nachdem er verschlossen wurde, in eine Hohlform in Form eines Glasrohres mit einem Durchmesser von 25 mm gesteckt, in welche zuvor 40 ml Dijodmethan zur Ausbildung der Hilfsschicht 9 eingefüllt worden ist. Die Hilfsschicht aus einer Flüssigkeit, deren Dichte größer als die Dichte der Suspension ist, hat grundsätzlich die Aufgabe, Oberflächenrauhigkeiten der Innenwandung der Hohlform auszugleichen und das spätere Entformen des Grünkörpers zu erleichtern. Im Falle der Anwendung eines Folienschlauches kommt als weitere Aufgabe der Hilfsschicht hinzu, daß der Folienschlauch in der Form besser zentriert wird. Die Vernetzung der Feststoffpartikel des aus der Suspension abgeschiedenen Grünkörpers durch Mikrowellenerhitzung erfolgt wie zu Beispiel I beschrieben durch fünffaches Hin- und Herfahren eines Mikrowellenresonators, der eine Leistung von 150 W abgibt. Der Resonator wurde mit einer Geschwindigkeit von 10 cm/min über die Hohlform hin- und heregeführt. Zur Entformung des zentrifugierten Grünkörpers 3 muß der Folienschlauch abgetrennt werden, was z.B. durch Lösen in heißem Phenol geschieht. Die Reinigung und Sinterung des erhaltenen Grünkörpers erfolgt in gleicher Weise, wie in Beispiel I beschrieben. Das auf diese Weise hergestellte Quarzglasrohr weist eine sehr glatte Außenoberfläche neben einer perfekt glatten Innenoberfläche auf. Die Rauhigkeit der Oberflächen ist geringer als 1 $\mu$m und die Exzentrizität und Schwankungen der Wanddicke sind geringer als 1 %. Nach Sinterung wurde ein blasen- und schlierenfreies Quarzglasrohr erhalten, das Verunreinigungen, insbesondere Wasser und Übergangsmetalle, nur noch in einer Menge $\leq 10$ ppb enthielt. Der Glaskörper hatte eine Dichte von 2,20 $g/cm^3$ und einen Brechungsindex $n_D = 1,4590$.

Beispiel III

Die gleiche Suspension wie zu Beispiel II beschrieben wird in analoger Weise in einen Folienschlauch gefüllt und verschlossen. Der Folienschlauch kann beispielsweise aus einem elastomeren Kunststoff wie Polyurethan bestehen. Anstelle eines Glasrohres als Hohlform wird eine aus zwei Halbschalen bestehende Glasform eines Durchmessers von 24 mm verwendet. Die übrigen Verfahrensparameter entsprechen den zu den Beispielen I und II beschriebenen.

Es wurde nach den in den Beispielen I und II beschriebenen weiteren Prozeßschritten ein Quarzglasrohr gleicher Qualität wie zu Beispiel II beschrieben erhalten.

Es ist möglich, nacheinander mehrere Schichten aus Suspensionen mit einem Feststoffanteil unterschiedlicher chemischer Zusammensetzung abzuscheiden und zu verfestigen. So können z.B. undotierte und unterschiedlich dotierte $SiO_2$-Pulver für die Herstellung unterschiedlicher Suspensionen eingesetzt werden, mittels derer Stufenprofile des Brechungsindex bei aus schichtförmig abgeschiedenen Grünkörpern herzustellenden Quarzglaskörpern erzeugt werden können.

Beispiel IV

In gleicher Weise, wie in Beispiel I beschrieben, wird eine Suspension aus 100 g Quarzglaspulver, 15 ml einer wässerigen 5%igen $NH_4F$-Lösung und 80 ml bidestilliertem Wasser in 30 Minuten in einem Ultraschallbad unter Rühren hergestellt und danach auf eine Temperatur von etwa 4°C abgekühlt.

Die kalte Suspension wird in einem Polyurethanschlauch mit einem Durchmesser von 26 mm und einer Wandstärke von etwa 50 µm gegossen. Der Schlauch wird in eine zweiteilige, teilbare Hohlform, die beispielsweise aus Metall, z.B. Aluminium, besteht, mit einer nutzbaren Länge von 350 mm und einem Innendurchmesser von 30 mm eingesetzt und unter leichtem Überdruck so aufgeblasen, daß er an der Innenwand der Hohlform anliegt. Danach wird der Schlauch verschlossen. Die Formgebung zu einem Rohr erfolgt durch Zentrifugieren über eine Dauer von 5 min bei einen Umdrehung von 3500 U/min.

Die Vernetzung zu einem starren Rohr geschieht durch Erhitzen der Hohlform von außen mit einem Heizgebläse einer Leistung von 2000 Watt, es ergibt sich dabei eine Lufttemperatur von 90°C; die Erhitzung dauert etwa 10 Minuten. Nach Abkühlen auf Zimmertemperatur wird der Schlauch mit Dimethylformamid aufgelöst und der noch feuchte Grünkörper senkrecht stehend langsam getrocknet.

Die Nachbehandlung erfolgt wie in Beispiel I beschrieben. Es wurde ein transparentes Quarzglasrohr einer Länge von 25 cm, eines Durchmessers von 22 mm (außen) und 14 mm (innen) und einer Dichte von 2,20 $g/cm^3$ und mit einem Brechungsindex $n_D$ = 1,4590 erhalten. Die Restverunreinigungen an Wasser und Übergangsmetallen betrugen weniger als 10 ppb.

**Patentansprüche**

1. Verfahren zur Herstellung von rotationssymmetrischen Glaskörpern, bei dem das Ausgangsmaterial für den Glaskörper in Form einer thixotropen Suspension, bestehend aus dem Werkstoff des auszubildenden Glaskörpers in Pulverform als Feststoff und einem flüssigen Dispergiermittel, in eine Hohlform (1) mit einer der Geometrie des auszubildenden Glaskörpers entsprechenden Geometrie eingebracht wird, derart, daß die Hohlform um ihre Längsachse gedreht wird, wobei sich die Suspension an der Innenwandung der Hohlform ablagert, wonach der entstandene Grünkörper (3) gereinigt und gesintert wird, dadurch gekennzeichnet, daß für den Feststoffanteil der thixotropen Suspension hochdisperse Teilchen eingesetzt werden, daß das Ausgangsmaterial durch Einwirkung mechanischer Kräfte in einen Zustand minimaler Viskosität überführt wird und daß das Ausgangsmaterial mitsamt der Hohlform auf eine Temperatur unterhalb des Siedepunktes der Dispergierflüssigkeit solange erhitzt wird, bis es vernetzt und verfestigt und der Hohlform entnehmbar ist.

2. Verfahren nach Anspruch 1, dadurch gekennzeichnet, daß als Ausgangsmaterial für den Glaskörper Suspensionen eingesetzt werden, die als Feststoff $SiO_2$-Partikel ohne oder mit für die Herstellung eines gewünschten Brechungsindex geeignete(r) Dotierung eines Durchmessers im Bereich von 10 bis 500 nm, vorzugsweise 10 bis 100 nm, mit einem mittleren Teilchendurchmesser von 40 nm enthalten.

3. Verfahren nach den Ansprüchen 1 und 2, dadurch gekennzeichnet, daß eine Suspension mit einem Feststoff: Dispergierflüssigkeit-Gewichtsverhältnis von 0,7:1 bis 2:1 eingesetzt wird.

4. Verfahren nach den Ansprüchen 1 bis 3, dadurch gekennzeichnet, daß als Dispergierflüssigkeit Wasser eingesetzt wird.

5. Verfahren nach den Ansprüchen 1 bis 4, dadurch gekennzeichnet, daß der Suspension ein ionogener Zusatzstoff zugefügt wird, der den pH-Wert der Suspension in Richtung auf den basischen Bereich (pH $\geq$ 5 und $\leq$ 8) verschiebt.

6. Verfahren nach Anspruch 5, dadurch gekennzeichnet, daß als ionogener Zusatzstoff eine Ammoniumverbindung eingesetzt wird.

7. Verfahren nach Anspruch 6, dadurch gekennzeichnet, daß als Zusatzstoff eine wässerige 5%ige $NH_4F$-Lösung eingesetzt wird.

8. Verfahren nach den Ansprüchen 5 bis 7, dadurch gekennzeichnet, daß der ionogene Zusatzstoff in einer Menge von 0,1 bis 5 Gew.%, bezogen auf den Feststoffanteil der Suspension, zugegeben wird.

9. Verfahren nach den Ansprüchen 1 bis 8, dadurch gekennzeichnet, daß als Ausgangsmaterial eine wässerige Suspension eingesetzt wird, die $SiO_2$-Partikel eines mittleren Teilchendurchmessers von 40 nm bei einem Feststoff: Wasser-Gewichtsverhältnis von 0,9:1 bis 1:1 enthält und der eine 5%ige wässerige $NH_4F$-Lösung in einer Menge von 0,75 bis 1 Gew.%, bezogen auf den Feststoffanteil der Suspension, zugesetzt ist.

10. Verfahren nach mindestens einem der Ansprüche 1 bis 9, dadurch gekennzeichnet, daß das Ausgangsmaterial vor dem Zentrifugieren durch Einwirkung von Schall bei einer Frequenz f = 20 bis 200 Hz oder Ultraschall bei einer Frequenz f = 20 bis 50 kHz in einem Zustand minimaler Viskosität überführt wird.

11. Verfahren nach mindestens einem der Ansprüche 1 bis 10,
dadurch gekennzeichnet, daß das durch Zentrifugieren in der Hohlform (1) abgeschiedene Ausgangsmaterial durch Einkoppeln von Mikrowellenenergie einer Frequenz f ≈ 2,45 GHz oder Hochfrequenzenergie einer Frequenz f ≈ 27 MHz auf eine Temperatur unterhalb des Siedepunktes der Dispergierflüssigkeit erhitzt wird.

12. Verfahren nach mindestens einem der Ansprüche 1 bis 11,
dadurch gekennzeichnet, daß eine Hilfsschicht (9) aus einer Flüssigkeit, deren Dichte größer als die Dichte der Suspension ist, vor Abscheiden des Grünkörpers (3) durch Zentrifugieren auf der Innenwandung der Hohlform (1) abgeschieden wird.

13. Verfahren nach Anspruch 12,
dadurch gekennzeichnet, daß als Flüssigkeit zur Bildung der Hilfsschicht (9) Bromnaphtalin eingesetzt wird.

14. Verfahren nach Anspruch 12,
dadurch gekennzeichnet, daß als Flüssigkeit zur Bildung der Hilfsschicht (9) Dijodmethan eingesetzt wird.

15. Verfahren nach mindestens einem der Ansprüche 1 bis 14,
dadurch gekennzeichnet, daß zwischen der Hilfsschicht (9) und dem Grünkörper (3) eine Trennschicht vorgesehen wird, die aus einem Kunststoff besteht, der mit der
Dispergierflüssigkeit nicht reagiert.

16. Verfahren nach Anspruch 15,
dadurch gekennzeichnet, daß als Material für die Trennschicht Polykarbonat eingesetzt wird.

17. Verfahren nach Anspruch 15,
dadurch gekennzeichnet, daß als Material für die Trennschicht Polyäthylenterephthalat eingesetzt wird.

18. Verfahren nach Anspruch 15,
dadurch gekennzeichnet, daß als Material für die Trennschicht ein elastomerer Kunststoff eingesetzt wird.

19. Verfahren nach Anspruch 18,
dadurch gekennzeichnet, daß als Material für die Trennschicht Polyurethan eingesetzt wird.

20. Verfahren nach den Ansprüchen 15 bis 19,
dadurch gekennzeichnet, daß das Material der Trennschicht in Schlauchform eingesetzt wird.

21. Verfahren nach Anspruch 2,
dadurch gekennzeichnet, daß als Dotierstoff $GeO_2$ eingesetzt wird.

22. Verfahren nach mindestens einem der Ansprüche 1 bis 21,
dadurch gekennzeichnet, daß als Ausgangsmaterial für den Glaskörper Suspensionen unterschiedlicher chemischer Zusammensetzung entsprechend einem gewünschten Brechungsindexprofil nacheinander auf der Innenwandung der Hohlform (1) abgeschieden werden.

23. Verfahren nach mindestens einem der Ansprüche 1 bis 22,
dadurch gekennzeichnet, daß die Suspension gekühlt, vorzugsweise auf eine Temperatur von ≈ 4°C, in die Hohlform (1) eingebracht wird.

24. Verfahren nach mindestens einem der Ansprüche 1 bis 23, dadurch gekennzeichnet, daß die hergestellten Glaskörper als Vorform für optische Wellenleiter verwendet werden.

25. Verfahren nach mindestens einem der Ansprüche 1 bis 23, dadurch gekennzeichnet, daß die hergestellten Glaskörper als Lampenkolben, insbesondere für Halogen- und Gasentladungslampen verwendet werden.

26. Vorrichtung zur Durchführung des Verfahrens nach den Ansprüchen 1 bis 25, mit einer als Zentrifuge um ihre Längsachse antreibbare Hohlform (1) zur Aufnahme von Ausgangsmaterial für den Glaskörper in Form einer Suspension zur Ausbildung eines Grünkörpers (3) mit zwei senkrecht zur Längsachse der Hohlform angeordneten Verschlußstopfen (5), gekennzeichnet durch eine Einrichtung (7), über welche Hochfrequenz- oder Mikrowellenenergie in die Hohlform und das in ihr befindliche Ausgangsmaterial einkoppelbar ist.

27. Vorrichtung nach Anspruch 26,
dadurch gekennzeichnet, daß die Einrichtung (7) ein in Richtung der Achse der Hohlform (1) verschiebbarer Mikrowellenresonator ist.

28. Vorrichtung nach den Ansprüchen 26 und 27,
dadurch gekennzeichnet, daß die Hohlform (1) aus einem dielektrischen Material besteht.

29. Vorrichtung nach Anspruch 28,
dadurch gekennzeichnet, daß die Hohlform (1) aus Glas, insbesondere aus Quarzglas, besteht.

30. Vorrichtung nach den Ansprüchen 26 bis 29,
dadurch gekennzeichnet, daß die Hohlform (1) ein Rohr ist, das stirnseitig mit den Verschlußstopfen (5) verschließbar ist.

31. Vorrichtung nach den Ansprüchen 26 bis 30,
dadurch gekennzeichnet, daß der Zentrifugalantrieb der Hohlform (1) mit Hilfe eines Motors, mit dessen Achse die Hohlform verbunden ist, erfolgt.

32. Vorrichtung nach Anspruch 31,
dadurch gekennzeichnet, daß der Motor für den Zentirfugalantrieb eine Drehzahl von 2000 bis 4000 U/min hat.

**Revendications**

1. Procédé pour la préparation de corps en verre à symétrie de révolution, selon lequel le matériau de départ pour le corps en verre est sous forme d'une suspension thixotrope constituée par la matière première du corps en verre à former à l'état pulvérulent comme matière solide et un dispersant liquide, est introduit dans un moule (1) dont la géométrie correspond à celle du corps en verre à former de façon que le moule soit mis en rotation autour de son axe longitudinal et la suspension se dépose sur la paroi intérieure du moule, après quoi le semi-produit formé (3) est purifié et fritté, caractérisé en ce que des particules de grosseurs très dispersées sont utilisées pour la part de matière solide de la suspension thixotrope, en ce que le matériau de départ est amené à l'aide de forces mécaniques dans un état de viscosité minimale et en ce que le matériau de départ est chauffé avec le moule à une température inférieure au point d'ébullition du liquide de dispersion jusqu'à ce qu'il soit réticulé et solidifié et puisse être sorti du moule.

2. Procédé selon la revendication 1, caractérisé en ce que comme matériau de départ pour les corps en verre on utilise des suspensions contenant comme matière solide des particules de $SiO_2$, avec ou sans le dopage approprié pour la réalisation d'un indice de réfraction désiré, et présentant un diamètre compris entre 10 et 500 nm, de préférence 10 à 100 nm, le diamètre moyen des particules étant de 40 nm.

3. Procédé selon la revendication 1 et 2, caractérisé par l'utilisation d'une suspension présentant un rapport en poids matière solide: liquide de dispersion de 0,7:1 à 2:1.

4. Procédé selon les revendications 1 à 3, caractérisé en ce que de l'eau est utilisée comme liquide de dispersion.

5. Procédé selon les revendications 1 à 4, caractérisé en ce que la suspension est additionnée d'un additif ionogène assurant le décalage de la valeur pH de la suspension vers la gamme basique (pH $\geqslant$ 5 et $\leqslant$ 8)

6. Procédé selon la revendication 5, caractérisé en ce qu'un composé d'ammonium est utilisé comme additif ionogène.

7. Procédé selon la revendication 6, caractérisé en ce qu'une solution aqueuse à 5% de $NH_4F$ est utilisée comme additif.

8. Procédé selon les revendications 5 à 7, caractérisé en ce que l'additif ionogène est ajouté en quantité de 0,1 à 5% en poids rapportée à la part de matière solide de la suspension.

9. Procédé selon les revendications 1 à 8, caractérisé en ce que comme matériau de départ on utilise une suspension aqueuse contenant des particules de $SiO_2$ d'un diamètre moyen de 40 nm dans le cas d'un rapport en poids de matière solide: eau de 0,9:1 à 1:1 et additionnée d'une solution aqueuse à 5% de $NH_4F$ dans une quantité de 0,75 à 1% en poids rapportée à la part de matière solide de la suspension.

10. Procédé selon au moins l'une des revendications 1 à 9, caractérisé en ce qu'avant la centrifugation, le matériau de départ est amené à un état de viscosité minimale par effet sonore à une fréquence f = 20 à 200 Hz ou par effet ultrasonore à une fréquence f = 20 à 50 kHz.

11. Procédé selon l'une des revendications 1 à 10, caractérisé en ce que le matériau de départ déposé par centrifugation dans le moule (1) est chauffé par couplage d'énergie à micro-ondes d'une fréquence f $\approx$ 2,45 GHz ou d'énergie à haute fréquence d'une fréquence f $\approx$ 27 MHz à une température inférieure au point d'ébullition du liquide de dispersion.

12. Procédé selon au moins l'une des revendications 1 à 11, caractérisé en ce qu'une couche auxiliaire (9) d'un liquide dont la densité est supérieure à la densité de la suspension est déposée sur la paroi intérieure du moule (1) avant le dépôt du semi-produit (3).

13. Procédé selon la revendication 12, caractérisé en ce que de la naphtaline de brome est utilisée comme liquide pour la formation de la couche auxiliaire 9.

14. Procédé selon la revendication 12, caractérisé en ce que du di-iodure de méthane est utilisé comme liquide pour la formation de la couche auxiliaire 9.

15. Procédé selon l'une des revendications 1 à 14, caractérisé en ce qu'une couche de séparation est disposée entre la couche auxiliaire (9) et le semi-produit (3) et est constituée par une matière synthétique qui ne réagit pas avec le liquide de dispersion.

16. Procédé selon la revendication 15, caractérisé en ce que du polycarbonate est utilisé comme matériau pour la couche de séparation.

17. Procédé selon la revendication 15, caractérisé en ce que du polyéthylènetérephtalate est utilisé comme matériau pour la couche de séparation.

18. Procédé selon la revendication 15, caractérisé en ce qu'une matière synthétique élastomère est utilisée comme matériau pour la couche de séparation.

19. Procédé selon la revendication 18, caractérisé en ce que du polyuréthane est utilisé comme matériau pour la couche de séparation.

20. Procédé selon les revendications 15 à 19, caractérisé en ce que le matériau de la couche de séparation est utilisé sous forme de tuyau.

21. Procédé selon la revendication 2, caractérisé en ce que $GeO_2$ est utilisé comme dopant.

22. Procédé selon au moins l'une des revendications 1 à 21, caractérisé en ce que comme matériau de départ pour les corps en verre des suspensions de compositions chimiques différentes sont déposées successivement sur la paroi intérieure du moule (1) selon un profil d'indices de réfraction désiré.

23. Procédé selon au moins l'une des revendications 1 à 22, caractérisé en ce que la suspension est introduite à l'état refroidi, de préférence à une température d'environ 4°C dans le moule (1).

24. Procédé selon au moins l'une des revendications 1 à 23, caractérisé en ce que les corps en verre réalisés sont utilisés comme préformes pour des guides d'ondes optiques.

25. Procédé selon au moins l'une des revendications 1 à 23, caractérisé en ce que les corps en verre réalisés sont utilisés comme ampoules de lampe, notamment pour les lampes à décharge dans le gaz et à l'halogène.

26. Dispositif pour la mise en œuvre du procédé selon les revendications 1 à 25 à l'aide d'un moule (1) pouvant être entraîné autour de son axe longitudinal comme centrifugeuse pour la réception d'un matériau de départ pour le corps en verre sous forme d'une suspension pour la formation d'un semi-produit (3) muni de deux bouchons de fermeture (5) disposés perpendiculairement à l'axe longitudinal du moule, caractérisé par un dispositif (7) par l'intermédiaire duquel de l'énergie à haute fréquence ou à micro-ondes est couplée au moule et au matériau de départ contenu dans ce dernier.

27. Dispositif selon la revendication 26, caractérisé en ce que le dispositif (7) est un résonateur à micro-ondes pouvant être déplacé dans la direction de l'axe du moule (1).

28. Dispositif selon les revendications 26 et 27, caractérisé en ce que le moule (1) est constitué par du matériau diélectrique.

29. Procédé selon la revendication 28, caractérisé en ce que le moule (1) est constitué par du verre, notamment du verre de quartz.

30. Dispositif selon les revendications 26 à 29, caractérisé en ce que le moule (1) est un tube qui peut être fermé du côté avant par les bouchons de fermeture (5).

31. Dispositif selon les revendications 26 à 30, caractérisé en ce que l'entraînement centrifuge du moule (1) s'effectue à l'aide d'un moteur dont l'arbre est relié au moule.

32. Dispositif selon la revendication 31, caractérisé en ce que pour l'entraînement centrifuge, le moteur présente une vitesse de rotation de 2000 à 4000 t/min.

**Claims**

1. A method of manufacturing rotationally symmetrical glass bodies, in which the starting material for the glass body, being a thixotropic suspension consisting of the solid material for the glass body in powder form and a liquid dispersing agent, is introduced into a hollow mould (1) whose geometry corresponds to that of the glass body to be formed, such that the hollow mould is rotated about its longitudinal axis to deposit the suspension on the inner wall of the hollow mould, after which the green body (3) thus formed is purified and sintered, characterized in that micrcdispersed particles are used as the solids content of the thixotropic suspension, the starting material is converted into a state of minimal viscosity by subjecting it to mechanical forces, and the starting material together with the hollow mould are heated at a temperature below the boiling point of the dispersing liquid until the starting material has cross-linked and solidified and ran be removed from the hollow mould.

2. A method as claimed in Claim 1, characterized in that suspensions are used as the starting material for the glass body, which contain $SiO_2$-particles as a solid, either with or without a suitable doping for the realization of a desired refractive index, having a diameter in the range from 10 to 500 nm, preferably from 10 to 100 nm, and an average particle diameter of 40 nm.

3. A method as claimed in Claims 1 and 2, characterized in that a suspension is used having a weight ratio between solid and dispersing liquid from 0.7:1 to 2:1.

4. A method as claimed in Claims 1 up to and including 3, characterized in that water is used as the dispersing liquid.

5. A method as claimed in Claims 1 up to and including 4, characterized in that an ionogenic additive is added to the suspension, which moves the pH-value of the suspension towards alkalinity (pH $\geq 5$ and $\leq 8$).

6. A method as claimed in Claim 5, characterized in that an ammonium compound is used as the ionogenic additive.

7. A method as claimed in Claim 6, characterized in that an aqueous 5% $NH_4F$ solution is used as the additive.

8. A method as claimed in Claims 5 up to and including 7, characterized in that the ionogenic additive is added in a quantity from 0.1 to 5% by weight relative to the solids content of the suspension.

9. A method as claimed in Claim 1 up to and including 8, characterized in that an aqueous suspension is used as the starting material, which contains $SiO_2$-particles having an average diameter of 40 nm and a solid:water weight ratio from 0.9:1 to 1:1, and to which a 5% aqueous $NH_4F$ solution in a quantity from 0.75 to 1% by weight relative to the solids content of the suspension is added.

10. A method as claimed in at least one of the Claims 1 up to and including 9, characterized in that prior to centrifuging the viscosity of the starting material is minimized under the influence of sound waves having a frequency $f = 20$ to 200 Hz or ultrasonic waves having a frequency $f = 20$ to 50 kHz.

11. A method as claimed in at least one of the Claims 1 up to and including 10, characterized in that the starting material deposited in the hollow mould (1) by centrifuging is heated to a temperature below the boiling point of the dispersing liquid by applying microwave energy having a frequency $f \approx 2.45$ GHz or high-frequency energy having a frequency $f \approx 27$ MHz.

12. A method as claimed in at least one of the Claims 1 up to and including 11, characterized in that an auxiliary layer (9) which consists of a liquid whose density is higher than that of the suspension is deposited on the inner wall of the hollow mould (1) by centrifuging prior to the deposition of the green body (3).

13. A method as claimed in Claim 12, characterized in that bromoaphtalene is used as the liquid for forming the auxiliary layer (9).

14. A method as claimed in Claim 12, characterized in that diiodomethane is used as the liquid for forming the auxiliary layer (9).

15. A method as claimed in at least one of the Claims 1 up to and including 14, characterized in that a separation layer is provided between the auxiliary layer (9) and the green body (3), which layer is made of a synthetic resin which does not react with the dispersing liquid.

16. A method as claimed in Claim 15, characterized in that polycarbonate is used as the material for the separation layer.

17. A method as claimed in Claim 15, characterized in that polyethylene terephtalate is used as the material for the separation layer.

18. A method as claimed in Claim 15, characterized in that an elastomeric synthetic resin is used as the material for the separation layer.

19. A method as claimed in Claim 18, characterized in that polyurethane is used as the material for the separation layer.

20. A method as claimed in Claims 15 up to and including 19, characterized in that the material of the separation layer takes the form of a sleeve.

21. A method as claimed in Claim 2, characterized in that $GeO_2$ is used as the dopant.

22. A method as claimed in at least one of the Claims 1 up to and including 21, characterized in that as the starting material for the glass body suspensions having a different chemical composition in accordance with a desired refractive index profile are deposited in succession on the inner surface of the hollow mould (1).

23. A method as claimed in at least one of the Claims 1 up to and including 22, characterized in that the suspension is introduced into the hollow mould (1) after it is cooled to a temperature of preferably ≈ 4°C.

24. A method as claimed in at least one of the Claims 1 up to and including 23, characterized in that the glass bodies manufactured are used as preforms for optical waveguides.

25. A method as claimed in at least one of the Claims 1 up to and including 23, characterized in that the glass bodies manufactured are used as lamp envelopes, in particular, for halogen lamps and gas-discharge lamps.

26. An arrangement for carrying out the method as claimed in Claims 1 up to and including 25, comprising a hollow mould (1) which can be rotated about its longitudinal axis like a centrifuge and in which starting material for the glass body is introduced in the form of a suspension for forming a green body (3), and two stoppers (5) which are arranged perpendicularly to the longitudinal axis of the hollow mould, characterized by a device (7) by means of which high-frequency energy or microwave energy can be applied to the hollow mould and the starting material contained therein.

27. An arrangement as claimed in Claim 26, characterized in that the device (7) is a microwave resonator which can be moved in the direction of the axis of the hollow mould (1).

28. An arrangement as claimed in Claims 26 and 27, characterized in that the hollow mould (1) consists of a dielectric material.

29. An arrangement as claimed in Claim 28, characterized in that the hollow mould (1) consists of glass, in particular quartz glass.

30. An arrangement as claimed in Claims 26 up to and including 29, characterized in that the hollow mould (1) is a tube which can be closed at both end fares with the stoppers (5).

31. An arrangement as claimed in Claims 26 up to and including 30, characterized in that for the purpose of centrifuging the hollow mould (1) is driven by a motor whose shaft is connected to the hollow mould.

32. An arrangement as claimed in Claim 31, characterized in that the motor used for centrifuging has a rotational speed of from 2000 to 4000 r.p.m.